# EUROPEAN PATENT APPLICATION

(11) **EP 2 053 357 A1**
(43) Date of publication of application: **29.04.2009**
(21) Application number: 07790812.7
(22) Date of filing: 13.07.2007
(51) Int. Cl.: G01C 21/00, G08G 1/137, G09B 29/00, G09B 29/10

(54) **NAVIGATION SERVER, NAVIGATION DEVICE, AND NAVIGATION SYSTEM**

(30) Priority: 17.08.2006 JP 2006222733
(71) Applicant: Honda Motor Co., Ltd., Tokyo 107-8556 (JP)
(72) Inventor: NOGAWA, Tadafumi, Tokyo 107-8556 (JP); MURATA, Satoshi, Tokyo 107-8556 (JP)
(74) Representative: Prechtel, Jörg
(86) International application number: PCT/JP2007/064032
(87) International publication number: WO 2008/020518

(57) **Abstract**

Provided is a navigation system capable of matching map information used by a navigation apparatus and a navigation server with an appropriate frequency and at an appropriate timing. When there is differential information between the navigation map information and support map information, index formation for identifying the differential information is transmitted from the navigation server (100) to the navigation apparatus (200) and the navigation apparatus (200) outputs preliminary information indicating a brief summary of the differential information generated according to the index information. When a request signal based on a request operation by a user performed in the navigation apparatus (200) is transmitted from the navigation apparatus (200) to the navigation server (100), the differential information is transmitted from the navigation server (100) to the navigation apparatus (200) so that the navigation map information is updated in accordance with the differential information.

## Description

### PRIORITY CLAIM

The present application is based on and claims the priority benefit of Japanese Patent Application 2006-222733 filed on August 17, 2006, the contents of which are incorporated herein by reference in its entirety.

### BACKGROUND OF THE INVENTION

### Field of the Invention

The present invention relates to a navigation server which is configured to support a guidance of a mobile subject guided by a navigation apparatus on the basis of communication with the navigation apparatus, a navigation apparatus which is configured to guide the mobile subject on the basis of communication with the navigation server, and a navigation system comprised of the navigation server and the navigation apparatus.

### Description of the Related Art

There has been disclosed an art (for example, refer to Japanese Patent Laid-open No. 2002-296042, paragraphs 0008 to 0009) in which differential information between map information of an old version and map information of a new version is transmitted from a navigation server to a navigation apparatus in accordance with the opening of a new road or the like, and the map information of the old version which is stored in a memory element of the navigation apparatus is updated to the map information of the new version according to the differential information.

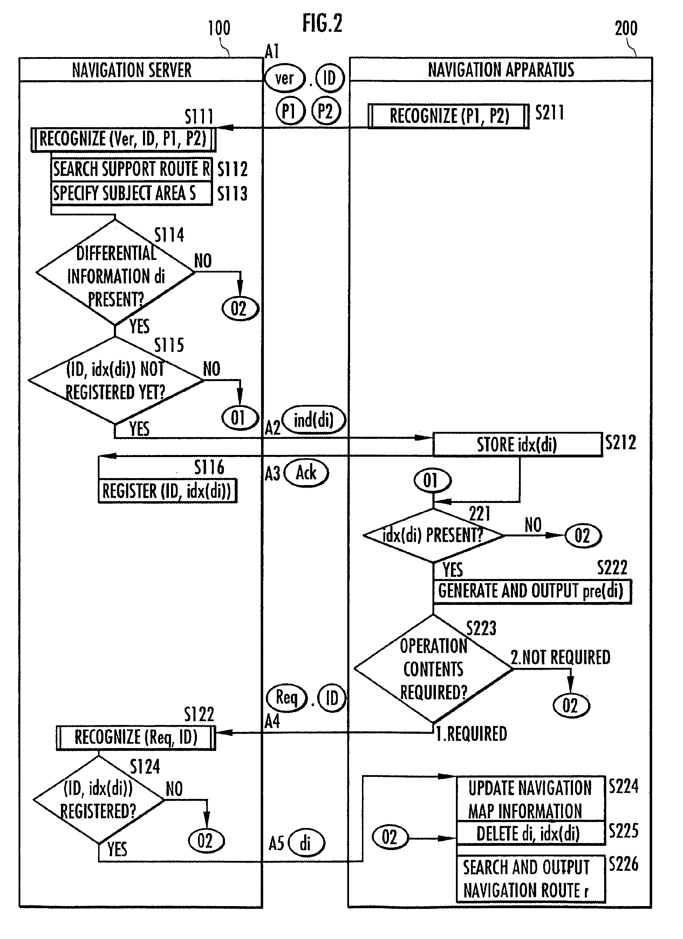

From the viewpoint of curtailing communication cost or the like on the differential information transmitted from the navigation server to the navigation apparatus, there has been disclosed an art which transmits to the navigation apparatus only the differential information having high necessity to a user (for example, refer to Japanese Patent Laid-open No. 2006-065246, paragraphs 0009 to 0010 and Fig. 2). Specifically, the difference between the map information used respectively by the navigation apparatus and the navigation server is determined according to the difference between a length of a route (predicted travel distance) searched by the navigation apparatus and a length of a route searched by the navigation server according to an identical algorithm, respectively. Thereafter, according to the determination result on the difference between the map information, the differential information of an area along the route searched by the navigation server is transmitted to the navigation apparatus.

However, even though the map information used by the navigation apparatus and the navigation server are different, it is possible that the routes searched respectively by the navigation apparatus and the navigation server according to an identical algorithm are the same. Thereby, when a vehicle is positioned at a road which is not included in the map information used by the navigation apparatus, the search of a route by the navigation apparatus may end unsuccessfully. As a result, this may cause the update of the map information in the navigation apparatus according to the determination result on the difference between the routes searched respectively by the navigation apparatus and the navigation server to end unsuccessfully.

### SUMMARY OF THE INVENTION

The present invention has been accomplished in view of the aforementioned problems, and it is therefore an objective of the present invention to provide a navigation system and the like capable of comparing and matching map information used respectively by a navigation apparatus and a navigation server at appropriate frequency and timing by considering the necessity of updating the map information used by the navigation apparatus.

According to a first aspect of the present invention, there is provided a navigation server which is configured to support a guidance of a mobile subject guided by a navigation apparatus on the basis of communication with the navigation apparatus, including: a support map storing element which is configured to store support map information; a first support processing element which is configured to recognize a version of navigation map information stored in a navigation map storing element which is provided in the navigation apparatus, a subject area which contains a part of or the entire part of a route joining a departure or present position and a destination position of the mobile subject, and a navigation identifier on the basis of communication with the navigation apparatus, to determine whether differential information between the navigation map information and the support map information is present in the subject area on the basis of the recognition result, and to transmit index information for identifying the differential information to the navigation apparatus identified by the navigation identifier to generate and output preliminary information indicating a brief summary of the differential information on the basis of the index information in the case where it is determined that the differential information is present; and a second support processing element which is configured to transmit the differential information to the navigation apparatus 200 on a condition that a request signal for the differential information in accordance with a request operation by a user performed on the navigation apparatus is received from the navigation apparatus where the index information is transmitted by the first support processing element.

According to the navigation server of the first aspect of the present invention, in the case where the differential information is present between the navigation map information and the support map information, the index information representing the differential information is transmitted to the navigation apparatus, and the preliminary information indicating a brief summary of the differential information is output by the navigation apparatus on the basis of the index information. Subsequently, the differential information is transmitted to the navigation apparatus on a condition that a request signal according to the request operation by a user performed on the navigation apparatus is present. Thereby, the navigation map information may be updated on the basis of the differential information.

After the brief summary of the differential information is recognized by a user by outputting the preliminary information from the navigation apparatus, the user may determine whether it is necessary to perform a request operation on the navigation apparatus, in other words, whether it is necessary to update the navigation map information on the basis of the differential information. Accordingly, the differential information which possesses poor necessity to the user may be avoided from being sent to the navigation apparatus, thereby, to save information processing resources used by the navigation server and the navigation apparatus, such as to communicate, memorize the differential information.

Moreover, the index information and the differential information which may be transmitted to the navigation apparatus are refined to those included in a subject area corresponding to a destination position of a mobile subject. Accordingly, the index information and the differential information which are considered to possess poor necessity from the viewpoint of the search of a route to the destination position by the navigation apparatus, thereby, to save information processing resources used to communicate the differential information or the like. As a result, it is expected to efficiently utilize communication resources and save communication cost between the navigation server and the navigation apparatus.

Moreover, by considering the necessity level of updating the navigation map information from the viewpoint of guiding the mobile subject from a departure or present position to a destination position thereof, the navigation map information used respectively by the navigation apparatus and the navigation server may be compared and matched at appropriate frequency and timing.

A navigation apparatus of a second aspect of the present invention which is configured to guide a mobile subject on the basis of communication with a navigation server, includes: a navigation map storing element which is configured to store navigation map information; a first processing element which is configured to recognize index information for identifying differential information between the navigation map information and support map information stored in a support map storing element included in the navigation server on the basis of communication with the navigation server; and a second processing element which is configured to output preliminary information indicating a brief summary of the differential information on the basis of the index information, recognize whether a request operation by a user is present, and transmit a request signal for the differential information to the navigation server on a condition that the request operation is present, and update the navigation map information stored in the navigation map storing element on the basis of the differential information received from the navigation server.

According to the navigation apparatus of the second aspect of the present invention, the navigation map information is updated on the basis of the differential information of a subject area having only high necessity to a user from the viewpoint of guiding the mobile subject from the departure position or present position to the destination position thereof. According thereto, by considering the necessity level of updating the navigation map information from the viewpoint of guiding the mobile subject from a departure or present position to a destination position thereof, the navigation map information used respectively by the navigation apparatus and the navigation server may be compared and matched at appropriate frequency and timing.

A third aspect of the present invention is dependent on the second aspect of the present invention, wherein the second processing element receives the index information indicating the differential information which is referred to as coordinates of plural locations in a newly opened road, and outputs a line joining the plural locations as the preliminary information.

According to the navigation apparatus of the third aspect of the present invention, a brief summary of a newly opened road which serves as the differential information, namely the preliminary information indicating a rough position, shape and the like of the newly opened road is output. Thereby, it is possible for a user to determine appropriately whether the differential information is necessary or not.

A navigation system of a fourth aspect of the present invention is comprised of the navigation server of the first aspect and the navigation apparatus of the second aspect of the present invention.

According to the navigation server of the fourth aspect of the present invention, the navigation map information used respectively by the navigation apparatus and the navigation server may be compared and matched at appropriate frequency and timing by considering the necessity level of updating the navigation map information from the viewpoint of guiding the mobile subject from a departure or present position of the mobile subject to a destination position thereof.

### BRIEF DESCRIPTION OF THE DRAWINGS

Fig. 1 is a structural diagram illustrating a configuration of a navigation system according to the present invention.
Fig. 2 is a functional diagram illustrating the functions of the navigation system according to the present invention.
Fig. 3 is a functional diagram illustrating the functions of the navigation system according to the present invention.
Fig. 4 is a functional diagram illustrating the functions of the navigation system according to the present invention.
Fig. 5 is a functional diagram illustrating the functions of the navigation system according to the present invention.

### DETAILED DESCRIPTION OF THE PREFERRED EMBODIMENTS

Hereinafter, embodiments of a navigation server, a navigation apparatus and a navigation system according to the present invention will be described in detail with reference to the drawings.

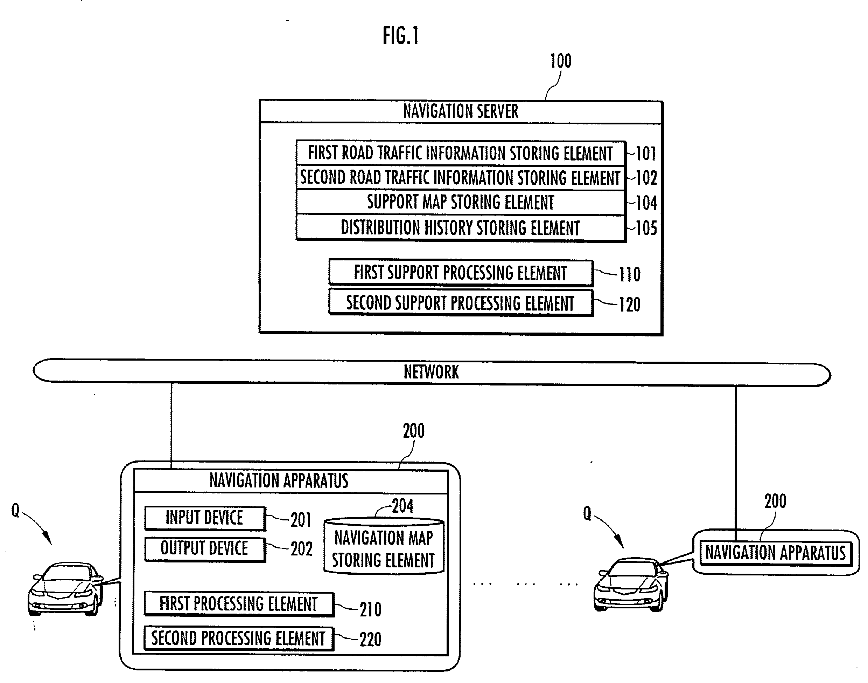

The configuration of the navigation system of the present invention will be described with reference to Fig. 1.

The navigation system illustrated in Fig. 1 is comprised of a navigation server 100, and a navigation apparatus 200 which is mounted in a vehicle (mobile subject) Q. It is also acceptable for the navigation apparatus 200 to be carried by a user who is equivalent to the mobile subject.

The navigation server 100 is comprised of one or a plurality of server computers (comprised of CPU, ROM, RAM, I/O and the like). The navigation server 100 is provided with a first road traffic information storing element 101, a second road traffic information storing element 102, a support map storing element 104, a distribution history storing element 105, a first support processing element 110, and a second support processing element 120.

The first road traffic information storing element 101 is stored with first road traffic information (required moving time, traffic congestion or the like for an individual link) which is based on probe information (position of an individual probe car at an individual timing) transmitted or uploaded from the navigation apparatus 200 to the navigation server 100. The navigation apparatus 200 is mounted in the vehicle 2 which serves as a probe car or a floating car.

The second road traffic information storing element 102 is stored with second road traffic information (traffic regulation information, event information of an event around an individual link, type information of the event if there were an event and the like, in addition to the required moving time and traffic congestion for the individual link) transmitted from a road traffic information center server or the like to the navigation server 100.

The support map storing element 104 is stored with support map information. In the support map information, the location, shape and posture or the like of an individual link constituting a road are expressed by a series of coordinates ((latitude, longitude), or (latitude, longitude, altitude)). Moreover, an individual link is tagged with link identifier for identifying the individual link and road type data. The support map information is updated successively through automatic input or manual input of information which is related to the open or close of a road.

The distribution history storing element 105 is stored with a combined information of a navigation identifier ID of an individual navigation apparatus 200, and index information idx(dᵢ) for identifying differential information dᵢ which has been distributed to the navigation apparatus 200.

The first support processing element 110, on the basis of communication with the navigation apparatus 200, recognizes version information ver representing a version of navigation map information, a subject area S containing a part of or the entire part of a support route R joining a departure position or present position p₁ and a destination position p₂ of the vehicle Q, and the navigation identifier ID for identifying the navigation apparatus 200.

Moreover, the first support processing element 110 determines whether the differential information dᵢ between the navigation map information of a version represented by the version information ver and the support map information stored in the support map information storing element 104 is present or not for the subject area S. If the differential information dᵢ is determined to be present, the first support processing element 110 transmits the index information idx(dᵢ) of the differential information dᵢ to the navigation apparatus 200 which is identified by the navigation identifier ID.

The second support processing element 120 transmits the differential information dᵢ to the navigation apparatus 200 on a condition that a request signal Req in accordance with a request operation by a user is received from the navigation apparatus 200 to which the index information idx(dᵢ) is transmitted by the first support processing element 110.

The navigation apparatus 200 is comprised of an ECU or a computer mounted in the vehicle Q as hardware, and a navigation program which provides the computer with various functions. It should be noted that the navigation program may be pre-installed in the memory (ROM) in the vehicular computer, or the entire or a part of the navigation program may be downloaded or broadcasted from a server (not shown) via a network or a satellite to the vehicular computer to store in the memory (EEPROM, RAM) or the like thereof at an arbitrary timing when there is a request or the like from the vehicular computer.

The navigation apparatus 200 is provided with an input device 201, an output device 202, a navigation map storing element 204, a first processing element 210 and a second processing element 220.

The input device 201 is comprised of operating buttons or a microphone disposed in a center console or the like of the vehicle 2. It is possible for a user to perform various settings by operating or vocally instructing the input device 201. The output device 202 is a display element disposed in the center console of the vehicle 2 for displaying or outputting the navigation map information or the like.

The navigation map storing element 204 is stored with the navigation map information or the like to be output to the output device 202. In the navigation map information, the location, shape and posture or the like of an individual link constituting a road are expressed by a series of coordinates. Moreover, an individual link is tagged with the link identifier for identifying the individual link. The navigation map information is tagged with the version information indicating the version of the navigation map information. Even though the definitions of the coordinates in the navigation map information and the support map information are different due to the different specifications and data architectures therebewteen, it is possible to match the links by tagging the identical links with common link identifier.

The first processing element 210 recognizes the index information idx(dᵢ) for identifying or specifying the differential information dᵢ on the basis of communication with the navigation server 100.

The second processing element 220 generates preliminary information pre(dᵢ) indicating a brief summary of the differential information dᵢ on the basis of the index information idx(dᵢ) recognized by the first processing element 210 and outputs the preliminary information pre(dᵢ) through the output device 202.

The second processing element 220 recognizes whether a request operation performed on the navigation apparatus 200 by a user is present or not. On a condition that the request operation is present, the second processing element 220 transmits the request signal Req for the differential information dᵢ to the navigation server 100.

The second processing element 220 receives the differential information dᵢ transmitted from the second support processing element 120 in correspondence to the request signal Req, and updates the navigation map information stored in the navigation map storing element 204 on the basis of the received differential information dᵢ.

It should be noted that "a component of the navigation server 100 or the navigation apparatus 200 which serves as hardware "recognizes" information" means that the component performs a possible information processing on a piece of information to prepare the piece of information ready for other information processing, for example, the component receives the piece of information; searches the piece of information in a database or memory or retrieves the piece of information from a database or memory; calculates, estimates, configures, determines, searches the piece of information or the like via arithmetic processing on the basis of the received basic information or the like; visualizes information by decoding packages; and stores in memory or the like the calculated information or the like. In addition, "a component serving as hardware "outputs" information" means that the component outputs the information in form of picture, voice, vibration and the like, which may be recognized by a human by means of five senses thereof such as eyesight, hearing, touch, etc.

The function of the navigation system with the above-mentioned configuration will be explained with reference to Fig. 2 through Fig. 5.

The first processing element 210 in the navigation apparatus 200 recognizes the present position p₁ and the destination position p₂ of the vehicle Q (Fig. 2/ S211). The present position p₁ of the vehicle Q is calculated or determined according to an arithmetic computation on GPS signals received by a GPS receiver, or output signals from a vehicular acceleration sensor, a vehicular gyro sensor or the like. The destination position p₂ of the vehicle Q is inputted to the navigation apparatus 200 via the input device 201 according to operations or the like performed by the user.

Moreover, the first processing element 210 transmits to the navigation server 100 the present position p₁, the destination position p₂, the version information ver indicating the version of the navigation map information, and the navigation identifier ID (which is stored in a memory of the navigation apparatus 200) of the navigation apparatus 200 (Fig. 2/ Arrow A1).

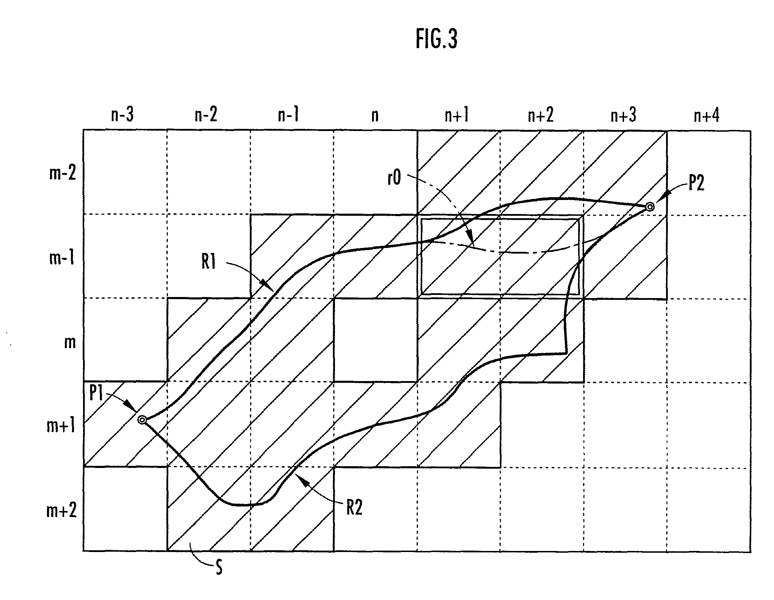

According thereto, the first support processing element 110 in the navigation server 100 recognizes the present position p₁, the destination position p₂, the version information ver, and the navigation identifier ID (Fig. 2/S111). The first support processing element 110 further retrieves the first road traffic information from the first road traffic information storing element 101, the second road traffic information from the second road traffic information storing element 102, and the support map information from the support map storage 104, respectively. On the basis of the retrieved information, the first support processing element 110 searches or sets one or plural support routes R which join the present position p₁ and the destination position p₂ and are constituted by a plurality of links (Fig. 2/ S112). Thereby, as illustrated in Fig. 3, two support routes R₁ and R₂ which join the present position p₁ and the destination position p₂ of the vehicle Q are set.

Further, the first support processing element 110 determines the subject area S containing a part of or the entire part of the support routes R (Fig. 2/ S113). Accordingly, for example, from a plurality of rectangular meshes illustrated in Fig. 3, the subject area S constituted by the slash-lined meshes which contains a part of the support route R₁ or R₂ is specified.

Furthermore, the first support processing element 110 determines whether the differential information dᵢ between the support map information and the navigation map information having the version information ver is present or not in the subject area S (Fig. 2/ S114). For example, in the case where a newly opened road r₀ illustrated in Fig. 3 by a dashed line which is not included in the navigation map information is added to the support map information of a version newer than that of the navigation map information, the differential information dᵢ representing the newly opened road r₀ is determined to be present in the subject area S.

In the case where the differential information dᵢ is determined to be present in the subject area S (Fig. 2/S121 ... YES), the second support processing element 120 determines whether a combination of the navigation identifier ID and the index information idx(dᵢ) of the differential information dᵢ which are recognized by the first support processing element 110 is registered or stored in the distribution history storage 105 (Fig. 2/ S115). The index information idex(dᵢ) includes coordinates representing a plurality of locations in the newly opened road r₀ ((latitude, longitude) or (latitude, longitude, altitude)), road category (toll road, toll-free road, expressway, general road, or the like), meshes included in the newly opened road r₀, link identifier for an individual link constituting the newly opened road r₀ and validity period (the open time or the close time of the road, the open period or the close period of the road, or the like).

In case where the combined information (ID, idx(dᵢ)) is determined to have not been registered or stored in the distribution history storing element 105 (Fig. 2/ S115 ... YES), the first support processing element 110 transmits the index information idx(dᵢ) to the navigation apparatus 200 which is identified by the navigation identifier ID (Fig. 2/Arrow A2).

According thereto, the first processing element 210 in the navigation apparatus 200 recognizes the index information idex(dᵢ) and stores it in a memory device such as a memory and the like (Fig. 2/ S212). Moreover, the first processing element 210 transmits an acknowledge notice Ack of the index information idx(dᵢ) to the navigation server 100 (Fig. 2/Arrow A3).

According thereto, the first support processing element 110 in the navigation server 100 registers or stores the combination of the navigation identifier ID and the index information idx(dᵢ) in the distribution history storing element 105 (Fig. 2/ S116).

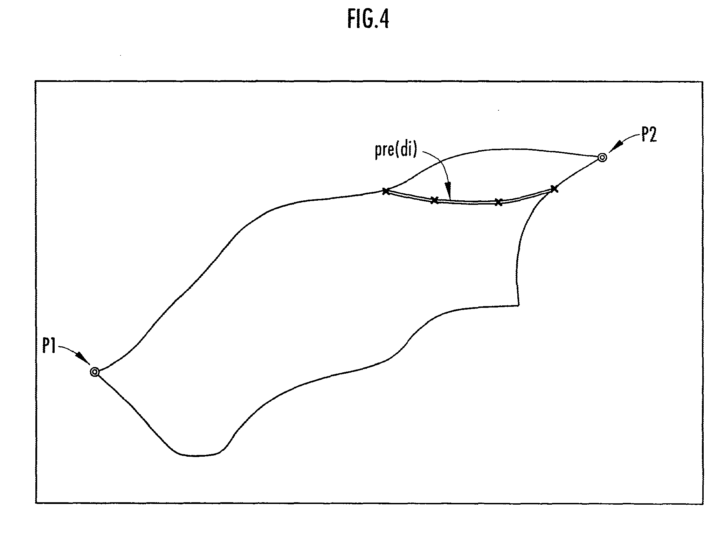

In the case where the differential information dᵢ is determined to be absent in the subject area S (Fig. 4/S114 ... NO), the first support processing element 110 notifies the navigation apparatus 200 to be identified by the navigation identifier ID with the determination result. Accordingly, the second processing element 220 defines (sets) and outputs a navigation route r for guiding the vehicle Q from the present position p₁ to the destination position p₂ on the basis of the navigation map information (Fig. 2/ S226).

In the case where the combination of the navigation identifier ID and the index information idx(dᵢ) is determined to have been registered in the distribution history storing element 105 (Fig. 2/ S115 ... NO), the first support processing element 110 notifies the navigation apparatus 200 with this determination result. According thereto, the second processing element 220 determines whether the index information idx(dᵢ) has been stored in the memory thereof (Fig. 2/ S221).

In the case where the index information idx(dᵢ) is determined to have been stored in the memory (Fig. 2/S221 ... YES), the second processing element 220 generates the preliminary information pre(dᵢ) on the basis of the index information idx(dᵢ) and outputs it through the output device 202 (Fig. 2/ S222). As a result, for example, as illustrated in Fig. 4, a line joining a plurality of points (represented with symbols X) in the newly opened road r₀ which is included in the index information idx(dᵢ) is displayed on the output device 202 as the preliminary information pre(dᵢ) indicating the newly opened road r₀, namely a brief summary (general allocation and shape) of the differential information dᵢ. It should be noted here that the preliminary information pre(dᵢ) may be displayed with a color different to that used in the other roads to enable the user to distinguish it easily from the other roads.

Further, the second processing element 220 displays on the output device 202 buttons "YES" and "NO" which may be operated by touching, in addition to the preliminary information pre(dᵢ) and a questioning message of "Update map information?". A touch to the "YES" button (a request operation) or a touch to the "NO" button (no request operation) is determined by the second processing element 220 (Fig. 2/ S223).

In the case where the request operation is determined to be performed by the user, the second processing element 220 transmits the request signal Req demanding for the differential information dᵢ to the navigation server 100, together with the navigation identifier ID of the navigation apparatus 200 (Fig. 2/ Arrow A4).

According thereto, the second support processing element 120 in the navigation server 100 recognizes the navigation identifier ID and the request signal Req (Fig. 2/ S122). Thereafter, the second support processing element 120 determines whether the combination of the navigation identifier ID and the index information idx(dᵢ) has been registered in the distribution history element 105 (Fig. 2/S124).

In the case where the second support processing element 120 determines that the information combination (ID, idx(dᵢ)) has been registered in the distribution history storing element 105 (Fig. 2/ S124 ... YES), the second support processing element 120 transmits the differential information dᵢ to the navigation apparatus 200 (Fig. 2/ Arrow A5). On the other hand, in the case where the second support processing element 120 determines that the information combination (ID, idx(dᵢ)) has not been registered in the distribution history storing element 105 (Fig. 2/ S124 ... NO), the second support processing element 120 notifies the navigation apparatus 200 that the differential information dᵢ which should be transmitted is absent. Accordingly, the second processing element 220 searches one or a plurality of navigation routes r for guiding the vehicle Q from the present position p₁ to the destination position p₂ on the basis of the navigation map information, and outputs one of the searched routes to the output device 202 (Fig. 2/ S226).

Moreover, the second processing element 220 receives the differential information dᵢ, and updates the navigation map information by adding the differential information dᵢ to the navigation map information stored in the navigation map storing element 204 (Fig. 2/ S224). Thereafter, the second processing element 220 deletes the differential information dᵢ used for the update and the index information idx(dᵢ) thereof (Fig. 2/ S225).

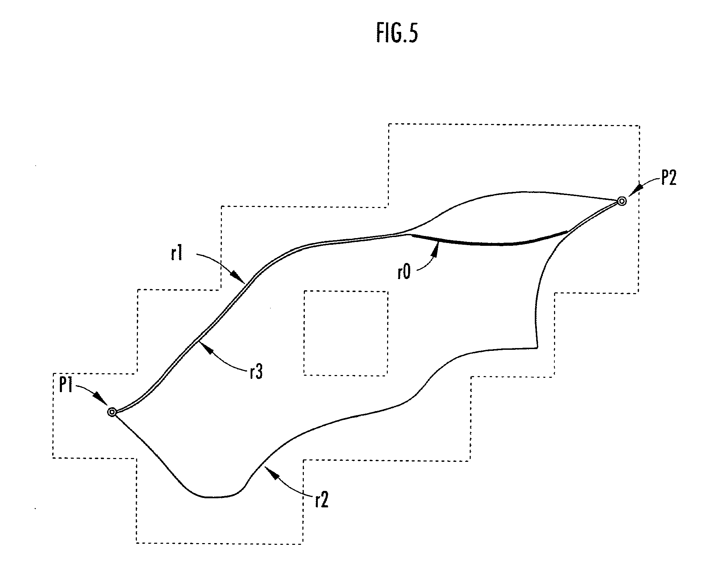

Subsequently, the second processing element 220 retrieves the navigation map information from the navigation map storing element 204. On the basis of the retrieved navigation map information, the second processing element 220 searches one or a plurality of navigation routes r joining the present position p₁ recognized by the first processing element 210 and the destination position p₂ and outputs the searched routes to the output device 202 (Fig. 2/ S226). Accordingly, for example, as illustrated in Fig. 5, in addition to the navigation routes r₁ and r₂ formed by the links included in the navigation map information prior to the update, a navigation route r₃ including a part of links which constitute a newly opened road r₀ is searched out and displayed on the output device 202.

It is also acceptable that the road traffic information is transmitted to the navigation apparatus 200 from the navigation server 100, and the navigation route r may be set on the basis of the road traffic information in the navigation apparatus 200. Herein, the road traffic information refers to a part of or the entire part of the link identifier for links included in a part of or the entire part of the support route R, or a part of or the entire part of the subject area S, the first road traffic information and the second road traffic information.

In the case where the second processing element 220 determines the request operation is not demanded by the user (Fig. 2/ S223), the second processing element 220, instead of deleting the index information idx(dᵢ), searches one or a plurality of navigation routes r joining the present position p₁ recognized by the first processing element 210 and the destination position p₂ on the basis of the navigation map information stored in the navigation map storing element 204, and outputs the searched routes r to the output device 202 (Fig. 2/ S226). Since the index information idx(dᵢ) is not deleted, a preliminary information pre(dᵢ) may be generated and output one more time on the basis of the index information idx(dᵢ) according to a destination position TP defined at a later time, as described above, and the navigation map information may be updated according to the request operation from the user (Fig. 2/ S221 to S224).

According to the navigation system exhibiting the functions mentioned above, a brief summary of the differential information dᵢ, such as a newly opened road r₀ or the like, is recognized by a user via the preliminary information pre(dᵢ) outputted by the navigation apparatus 200, therefore, it is possible for the user to determine whether it is necessary to perform a request operation, namely to update the navigation map information (refer to Fig. 2/ S222 and S223, Fig. 4). Accordingly, the index information idx(dᵢ) and the differential information dᵢ which possess poor necessity to the user is avoided from being sent to the navigation apparatus 200, thereby, to save information processing resources used to communicate or the like the index information idx(dᵢ) and the differential information dᵢ.

Moreover, the index information idx(dᵢ) and the differential information dᵢ which are transmitted to the navigation apparatus 200 are refined to the differential information dᵢ for the subject area S which is determined according to the destination position p₂ or the like of the vehicle and the index information idx(dᵢ) for identifying the differential information dᵢ. Accordingly, the index information idx(dᵢ) and the differential information dᵢ which are considered to possess poor necessity from the viewpoint of a route r to the destination position p₂ searched by the navigation apparatus 200 200, thereby, to save information processing resources used to communicate or the like the index information idx(dᵢ) and the differential information dᵢ (refer to Fig. 2/ S112 and S113, and Fig. 3).

As a result, it is expected to efficiently utilize communication resources and save communication cost between the navigation server 100 and the navigation apparatus 200.

Moreover, by considering the necessity of updating the navigation map information used by the navigation apparatus 200 to search the navigation route, the navigation map information used respectively by the navigation apparatus 200 and the navigation server 100 may be compared and matched at appropriate frequency and timing.

The differential information dᵢ and the index information idx(dᵢ) thereof used to update the navigation map information are discarded or erased from the memory (refer to Fig. 2/ S225). As a result, the differential information dᵢ and the index information idx(dᵢ) which have been used to update the navigation map information and therefore are not needed any more are deleted to avoid of lowering the memory size of the navigation apparatus 200 unnecessarily.

Further, the combination of the navigation identifier ID of the navigation apparatus 200 and the index information idx(dᵢ) is registered to the distribution history storing element 105 on a condition that the index information idx(dᵢ) is transmitted to the navigation apparatus 200 (refer to Fig. 2/ S115). Thereby, an identical index information idx(dᵢ) for an identical navigation apparatus 200, consequently an identical differential information dᵢ is prevented from being sent repeatedly (refer to Fig. 2/ S115).

In the above embodiment, the support route R is searched and the subject area S containing at least part of the support route R is recognized in the navigation server 100 (refer to Fig. 2/ S112 and S113).

However, as another embodiment, it is possible that the navigation route r joining the present position p₁ and the destination position p₂ of the vehicle Q is searched in the navigation apparatus 200 and the link identifier of an individual link constituting the navigation route r is transmitted from the navigation apparatus 200 to the navigation server 100, and the subject area S containing a part of or the entire part of the links identified according to the link identifier by the first support processing element 110 in the navigation server 100.

As a further embodiment, it is possible that the navigation route r is searched and the subject area S containing a part of or the entire part of the navigation route r is determined in the navigation apparatus 200, and the determined subject area S is transmitted to the navigation server 100 from the navigation apparatus 200 to be recognized by the first support processing element 110 thereafter.

Although the present invention has been explained in relation to the preferred embodiments and drawings but not limited, it should be noted that other possible modifications and variations made without departing from the gist and scope of the invention will be comprised in the present invention. Therefore, the appended claims encompass all such changes and modifications as falling within the gist and scope of the preset invention.

## Claims

1. A navigation server which is configured to support a guidance of a mobile subject guided by a navigation apparatus on the basis of communication with the navigation apparatus, comprising:
a support map storing element which is configured to store support map information;
a first support processing element which is configured to
recognize a version of navigation map information stored in a navigation map storing element which is provided in the navigation apparatus, a subject area which contains a part of or the entire part of a route joining a departure or present position and a destination position of the mobile subject, and a navigation identifier of the navigation apparatus, on the basis of communication with the navigation apparatus,
determine whether differential information between the navigation map information and the support map information is present in the subject area on the basis of the recognition result, and
transmit index information for identifying the differential information to the navigation apparatus identified by the navigation identifier to generate and output preliminary information indicating a brief summary of the differential information on the basis of the index information in the case where it is determined that the differential information is present; and
a second support processing element which is configured to transmit the differential information to the navigation apparatus on a condition that a request signal for the differential information in accordance with a request operation by a user performed on the navigation apparatus is received from the navigation apparatus where the index information is transmitted by the first support processing element.

2. A navigation apparatus which is configured to guide a mobile subject on the basis of communication with a navigation server, comprising:
a navigation map storing element which is configured to store navigation map information;
a first processing element which is configured to recognize index information for identifying differential information between the navigation map information and support map information stored in a support map storing element included in the navigation server on the basis of communication with the navigation server; and
a second processing element which is configured to
output preliminary information indicating a brief summary of the differential information on the basis of the index information,
recognize whether a request operation by a user is present, and transmit a request signal for the differential information to the navigation server on a condition that the request operation is present, and
update the navigation map information stored in the navigation map storing element on the basis of the differential information received from the navigation server.

3. The navigation apparatus according to claim 2, wherein coordinates of plural locations in a newly opened road serve as the differential information, the second processing element receives the index information indicating the differential information and outputs a line joining the plural locations as the preliminary information.

4. A navigation system comprised of a navigation apparatus and a navigation server which is configured to support a guidance of a mobile subject guided by the navigation apparatus on the basis of communication with the navigation apparatus, in which
the navigation server includes
a support map storing element which is configured to store support map information;
a first support processing element which is configured to
recognize a version of navigation map information stored in a navigation map storing element which is provided in the navigation apparatus, a subject area which contains a part of or the entire part of a route joining a departure or present position and a destination position of the mobile subject, and a navigation identifier, on the basis of communication with the navigation apparatus,
determine whether differential information between the navigation map information and the support map information is present in the subject area on the basis of the recognition result, and
transmit index information for identifying the differential information to the navigation apparatus identified by the navigation identifier to generate and output preliminary information indicating a brief summary of the differential information on the basis of the index information in the case where it is determined that the differential information is present; and
a second support processing element which is configured to transmit the differential information to the navigation apparatus on a condition that a request signal for the differential information in accordance with a request operation by a user performed on the navigation apparatus is received from the navigation apparatus where the index information is transmitted by the first support processing element.
the navigation apparatus includes
a navigation map storing element which is configured to store navigation map information;
a first processing element which is configured to recognize index information for identifying differential information between the navigation map information and support map information stored in a support map storing element included in the navigation server on the basis of communication with the navigation server; and
a second processing element which is configured to
output preliminary information indicating a brief summary of the differential information on the basis of the index information,
recognize whether a request operation by a user is present, and transmit a request signal for the differential information to the navigation server on a condition that the request operation is present, and
update the navigation map information stored in the navigation map storing element on the basis of the differential information received from the navigation server.
